# EUROPÄISCHE PATENTSCHRIFT

(11) **EP 1 281 001 B1**
(45) Veröffentlichungstag und Bekanntmachung des Hinweises auf die Patenterteilung: **10.09.2003**
(21) Anmeldenummer: 01936291.2
(22) Anmeldetag: 27.04.2001
(51) Int. Cl.: F15B 13/00, F16K 27/00

(54) **VENTILANORDNUNG MIT EINEM ÜBER EINEN OFFENEN LÄNGENABSCHNITT VERFÜGENDEN INTERNEN STRÖMUNGSKANAL**
VALVE ASSEMBLY COMPRISING AN INTERNAL FLOW CHANNEL WITH AN OPEN LONGITUDINAL SECTION
ENSEMBLE SOUPAPE POURVU D'UN CONDUIT D'ECOULEMENT INTERNE AYANT UN SEGMENT DE LONGUEUR OUVERT

(30) Priorität: 03.05.2000 DE 10021518
(43) Veröffentlichungstag der Anmeldung: 05.02.2003
(73) Patentinhaber: Festo Ag & Co., 73734 Esslingen (DE)
(72) Erfinder: RÜDLE, Manfred, 73734 Esslingen (DE)
(74) Vertreter: Abel, Martin, Dipl.-Ing.
(86) Internationale Anmeldenummer: EP0104775
(87) Internationale Veröffentlichungsnummer: WO01083999

(56) Entgegenhaltungen:
- EP-A- 0 628 729
- EP-A- 0 719 949
- EP-A- 0 822 340
- US-A- 4 770 210

## Beschreibung

Die Erfindung betrifft eine Ventilanordnung gemäß dem Oberbegriff des Anspruchs 1.

Eine Ventilanordnung dieser Art geht beispielsweise aus der EP 0 678 676 B1 hervor. Diese enthält mehrere plattenartige Ventileinheiten, die durch Zuganker zu einer Baugruppe zusammengespannt sind, wobei benachbarte Ventileinheiten miteinander zugewandten Anbauflächen aneinander anliegen. Jede Ventileinheit enthält eine Ventileinrichtung, die in der Lage ist, die Fluidströmung in Arbeitskanälen zu steuern, die zu einer quer zur Aufreihungsrichtung der Ventileinheiten orientierten Außenfläche der jeweiligen Ventileinheit ausmünden. Die Fluidzufuhr und -abfuhr bezüglich der Ventileinheiten erfolgt über Fluidkanäle, die die einzelnen Ventileinheiten in der Aufreihungsrichtung durchsetzen und miteinander fluchten.

Ferner ist es beispielsweise aus der DE 43 24 939 C2 und der EP 0 643 811 B1 bereits bekannt, einzelne Ventileinheiten mit einem längsgeteilten Gehäuse zu versehen, das im Teilungsbereich über nutartige Vertiefungen verfügt, die sich im zusammengesetzten Zustand des Gehäuses zu Strömungskanälen ergänzen. Eine Wechselwirkung dahingehend, dass ein Ventilgehäuse gleichzeitig auch eine Gehäusefunktion bezüglich einer benachbarten Ventileinheit übernimmt, ist hier jedoch nicht vorgesehen. Wie die US 5 341 846 zeigt, blieb man bisher selbst bei Ventileinheiten mit längsgeteilten Gehäusen bei einer konventionellen individuellen Aufreihung, wenn es darum ging, mehrere Ventileinheiten baugruppenartig zu einer Ventilanordnung zusammenzufassen.

Im Zuge einer beabsichtigten Miniaturisierung der bekannten Ventilanordnung hat sich herausgestellt, dass in der Aufreihungsrichtung ein gewisses Mindestmaß nicht unterschritten werden kann, um die gewünschten Strömungsquerschnitte gewährleisten zu können.

Es ist daher die Aufgabe der vorliegenden Erfindung, eine Ventilanordnung der eingangs genannten Art zu schaffen, mit der sich ohne Beeinträchtigung der Funktionsfähigkeit auch kleine Baugrößen realisieren lassen.

Zur Lösung dieser Aufgabe ist eine Ventilanordnung gemäß dem Anspruch 1 vorgesehen.

Vorteilhafte Weiterbildungen der Erfindung gehen aus den Unteransprüchen hervor.

Nachfolgend wird die Erfindung anhand der beiliegenden Zeichnung näher erläutert. In dieser zeigen:
- Figur 1: eine erste Bauform der erfindungsgemäßen Ventilanordnung in einer Vorderansicht mit Blickrichtung gemäß Pfeil I aus Figur 2,
- Figur 2: in schematischer Darstellung einen Querschnitt durch die Ventilanordnung aus Figur 1 gemäß Schnittlinie II-II im Fügebereich zweier aneinander angesetzter Ventileinheiten, wobei die Blickrichtung auch derjenigen entspricht, wie sie in Figur 3 durch Pfeil III verdeutlicht ist,
- Figur 3: eine Teildarstellung der Ventilanordnung aus Figuren 1 und 2, wobei in explosionsartiger Darstellung plattenartige Basiskörper dreier Ventileinheiten, teilweise aufgebrochen, dargestellt sind und wobei eine bevorzugte Ausführungsform eines zwischen benachbarten Ventileinheiten zu platzierenden Dichtungselementes ersichtlich ist, und
- Figur 4: die Anordnung der beiden in Figur 3 links abgebildeten Ventileinheiten mit zwischengefügtem Dichtungselement in einer Rückansicht mit Blickrichtung etwa gemäß Pfeil IV aus Figur 3.

Die abgebildete Ventilanordnung 1 enthält mehrere jeweils vorzugsweise eine plattenähnliche Flachgestalt aufweisende Ventileinheiten 2, die unter Bildung einer baugruppenartigen Einheit in einer durch eine strichpunktierte Linie verdeutlichten Aufreihungsrichtung 3 aufeinanderfolgend angeordnet und fest miteinander verbunden sind.

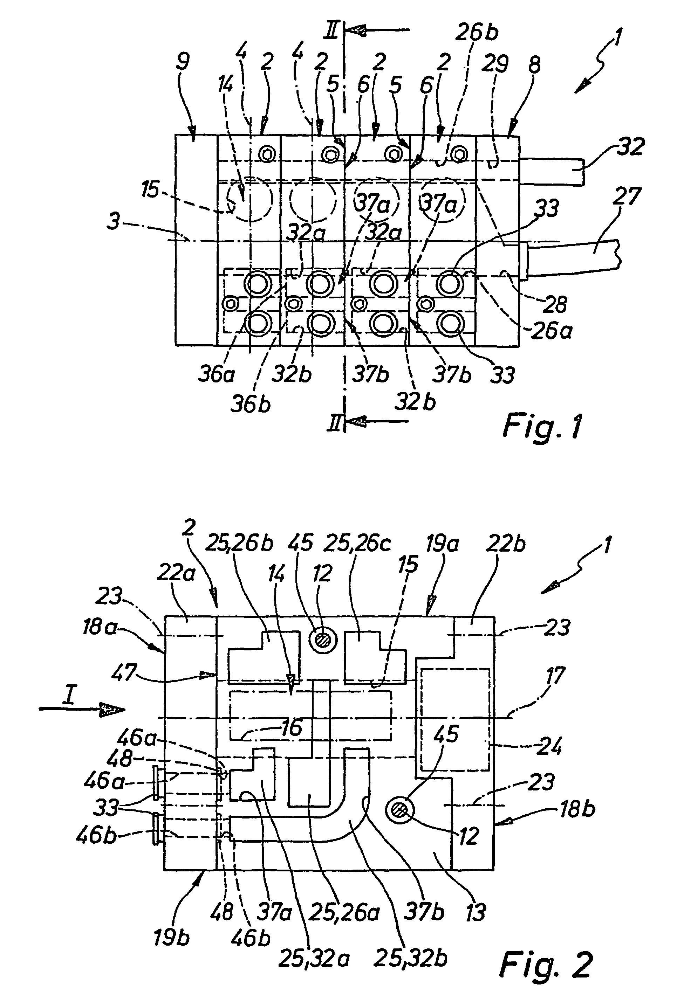

Die einzelnen Ventileinheiten 2 sind dabei so ausgerichtet, dass ihre in Figur 1 strichpunktiert angedeuteten Ausdehnungsebenen 4 rechtwinkelig zur Aufreihungsrichtung 3 ausgerichtet sind.

Jede Ventileinheit 2 verfügt an ihren einander entgegengesetzt orientierten großflächigen Seiten über erste bzw. zweite Anbauflächen 5, 6, wobei in der Aufreihungsrichtung 3 unmittelbar benachbarte Ventileinheiten 2 mit einander zugewandten Anbauflächen unter Zwischenschaltung von Dichtmitteln 7 aneinander angesetzt sind. Die Reihe von Ventileinheiten 2 wird einenends von einem ersten Abschlusskörper 8 und andernends von einem zweiten Abschlusskörper 9 flankiert, der an die in der Aufreihungsrichtung 3 orientierte Außenseite der jeweils zugeordneten letzten bzw. äußeren Ventileinheit 2 angesetzt ist.

Die sich bei Blick in der Aufreihungsrichtung 3 ergebende Außenkontur der Ventileinheiten 2 und Abschlusskörper 8, 9 ist zweckmäßigerweise identisch, wobei zweckmäßigerweise eine rechteckförmige Konturierung gewählt wird, so dass die Ventilanordnung 1 eine quaderförmige und insbesondere würfelartige Gestalt haben kann.

Die in der geschilderten Weise Seite an Seite aneinander angesetzten Komponenten der Ventilanordnung 1 sind fest und zugleich lösbar miteinander verbunden. Bevorzugt sind die erwähnten Komponenten in der Aufreihungsrichtung 3 zusammengespannt, was durch in Figur 2 angedeutete Zuganker 12 geschehen kann, die die einzelnen plattenartigen Komponenten durchsetzen und an den beiden endseitigen Abschlusskörpern 8, 9 fest verankert sind.

Die einzelnen, bevorzugt plattenähnlich aufgebauten Ventileinheiten 2 sind beim Ausführungsbeispiel jeweils mehrteilig ausgeführt. Hauptkomponente ist ein wiederum plattenähnlicher Basiskörper 13, der mit einer Ventileinrichtung 14 bestückt ist, welche beim Ausführungsbeispiel im Innern des Basiskörpers 13 untergebracht ist, so dass diesbezüglich eine integrierte Bauweise vorliegt.

Bevorzugt enthält die Ventileinrichtung 14 eine von einem Hohlraum des Basiskörpers 13 gebildete längliche Aufnahme 15, in der mindestens ein in Figur 2 strichpunktiert angedeutetes Ventilglied 16 beweglich aufgenommen ist. Die Ventileinrichtung 14 hat bevorzugt eine Längserstreckung, wobei sie so ausgerichtet ist, dass ihre Längsachse 17 innerhalb der oder parallel zur Ausdehnungsebene 4 der betreffenden Ventileinheit 2 verläuft. Die Längsachse 17 durchsetzt dabei zwei einander entgegengesetzte, jeweils quer zur Aufreihungsrichtung 3 orientierte Außenflächen der zugeordneten Ventileinheit 2, die nachfolgend der besseren Übersichtlichkeit halber als vordere und rückseitigen Außenflächen 18a, 18b bezeichnet seien.

Auf Grund ihrer rechteckförmigen Konturierung verfügt eine jeweilige Ventileinheit 2 beim Ausführungsbeispiel noch über zwei weitere, rechtwinkelig zu den vorerwähnten Außenflächen 18a, 18b verlaufende Außenflächen, die zur besseren Unterscheidung als obere und untere Außenfläche 19a, 19b bezeichnet seien. Die vorstehenden Orientierungsangaben beziehen sich lediglich auf eine bevorzugte Ausrichtung der Ventilanordnung 1 und sind daher nicht im einschränkenden Sinne zu verstehen.

An die schmalseitigen Vorder- und Rückseiten des Basiskörpers 13 ist beim Ausführungsbeispiel jeweils ein vorderer bzw. rückseitiger Zusatzkörper 22a, 22b fest angesetzt, was beispielsweise mittels Befestigungsschrauben erfolgen kann, die in Figur 2 strichpunktiert bei 23 angedeutet sind. Die vordere und rückseitige Außenfläche 18a, 18b einer jeweiligen Ventileinheit 2 befindet sich an der dem Basiskörper 13 entgegengesetzten Außenseite des betreffenden vorderen bzw. rückseitigen Zusatzkörpers 22a, 22b.

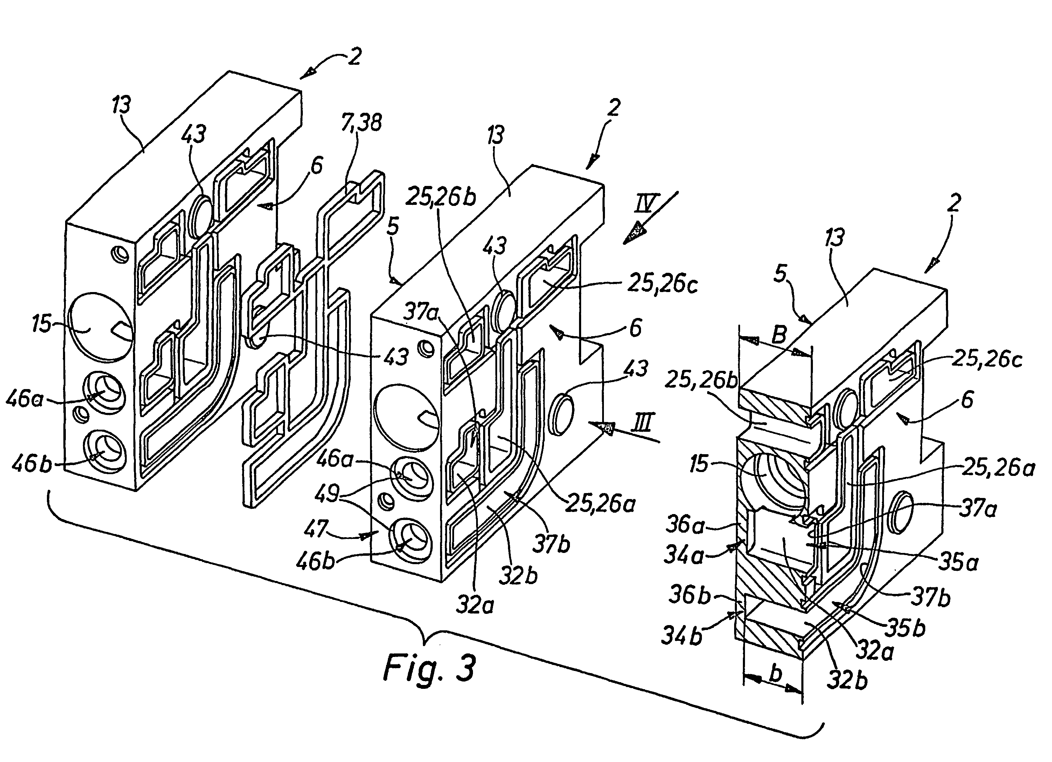

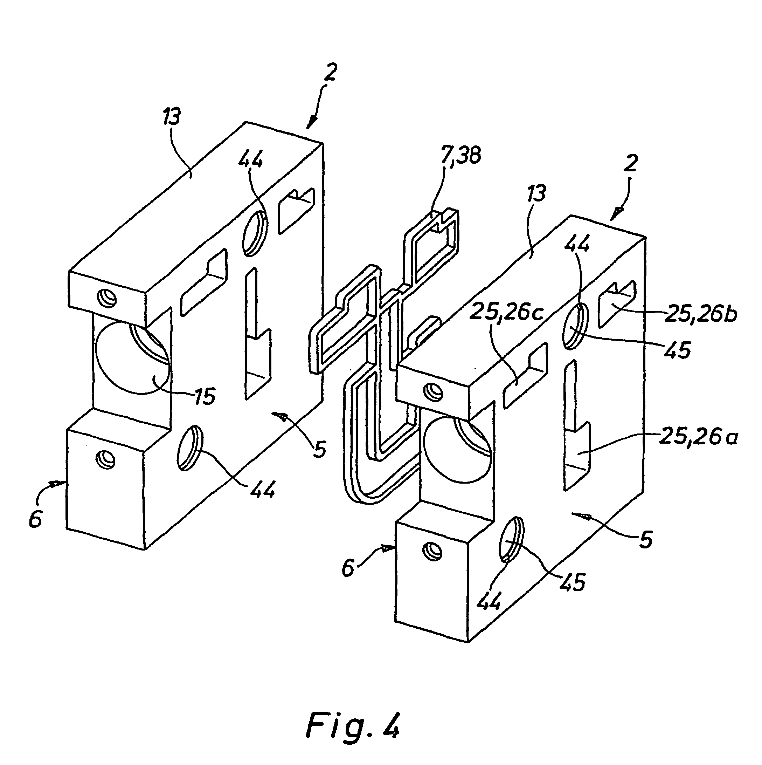

In den Figuren 3 und 4 sind von den Ventileinheiten 2 jeweils nur die Basiskörper 13 abgebildet.

Der rückseitige Zusatzkörper 22a bildet einen Träger für eine nur strichpunktiert angedeutete, elektrisch aktivierbare Ventilantriebseinrichtung 24. Durch sie läßt sich die Ventileinrichtung 14 wunschgemäß betätigen und insbesondere das in Figur 3 und 4 nicht abgebildete Ventilglied 16 in unterschiedlichen Schaltstellungen innerhalb der Aufnahme 15 positionieren.

Bei Bedarf könnte die Ventilantriebseinrichtung 24 ganz oder teilweise im oder am vorderen Zusatzkörper 22a vorgesehen werden.

Die Ventilantriebseinrichtung 24 kann ein oder mehrere Vorsteuerventile beinhalten, beispielsweise in Gestalt sehr klein bauender Mikroventile und/oder Piezoventile.

In Abhängigkeit vom Schaltzustand der Ventileinrichtung 14 können innerhalb einer jeweiligen Ventileinheit 2 verschiedene zur Führung eines Druckmediums, insbesondere Druckluft, dienende Kanäle 25 in unterschiedlicher Weise miteinander verknüpft werden. Unter diesen Kanälen 25 befinden sich mehrere Fluidkanäle 26a, 26b, 26c, vorliegend drei Stück, die die betreffende Ventileinheit 2 in ihrem Basiskörper 13 in der Aufreihungsrichtung 3 durchsetzen, so dass sie zu beiden Anbauflächen 5, 6 der jeweiligen Ventileinheit 2 ausmünden. Indem die Ventileinheiten 2 aneinandergesetzt sind, liegen sich die Mündungen der vorerwähnten Fluidkanäle benachbarter Ventileinheiten 2 fluchtend gegenüber, so dass sich eine der Anzahl der Fluidkanäle 26a, 26b, 26c entsprechende Anzahl von Durchgangskanälen ergibt, die durch sämtliche Ventileinheiten 2 hindurchlaufen. Durch die schon erwähnten Dichtmittel 7 wird gewährleistet, dass zwischen den einzelnen Ventileinheiten 2 ein nach außen hin fluiddichter Übergang zwischen den einzelnen Fluidkanälen erfolgt. Die Dichtmittel 7 befinden sich jeweils im Umfangsbereich der miteinander kommunizierenden Mündungen einander zugeordneter Fluidkanäle 26a, 26b, 26c der einzelnen Ventileinheiten 2 und umschließen dieselben.

Beim Ausführungsbeispiel sind die ersten Fluidkanäle 26a als Speisekanäle ausgebildet und ermöglichen eine zentrale Speisung sämtlicher Ventileinheiten 2 mit dem zu verteilenden Druckmedium. Letzteres wird beispielsweise über eine Fluidleitung 27 eingespeist, die am ersten Abschlusskörper 8 anschließbar ist und mit einer Durchgangsöffnung 28 desselben in Verbindung steht, die mit dem Speisekanal 26a der ersten Ventileinheit 2 kommuniziert.

Die beiden anderen Fluidkanäle 26b, 26c sind beim Ausführungsbeispiel als Entlüftungskanäle ausgeführt und kommunizieren mit weiteren Durchgangsöffnungen 29 des ersten Abschlusskörpers 8, über die sie mit der Atmosphäre verbindbar sind. Dabei kann den weiteren Durchgangsöffnungen 29 am ersten Abschlusskörper 8 ein Schalldämpfer 32 zugeordnet sein, um das Ausströmgeräusch zu verringern.

Der entgegengesetzt angeordnete zweite Abschlusskörper 9 hat beim Ausführungsbeispiel eine reine Deckelfunktion. Es versteht sich jedoch, dass die Durchgangsöffnungen 28, 29 zumindest teilweise auch an dem zweiten Abschlusskörper 9 vorgesehen werden könnten.

Die Fluidkanäle 26a, 26b, 26c stehen innerhalb eines jeweiligen Basiskörpers 13 mit der Aufnahme 15 der betreffenden Ventileinrichtung 14 in Verbindung.

Unter den Kanälen 25 einer jeweiligen Ventileinheit 2, die einenends mit der Aufnahme 15 verbunden sind, befinden sich auch mindestens ein und vorzugsweise mehrere interne Strömungskanäle 32a, 32b - beim Ausführungsbeispiel zwei Stück -, die im Innern der Ventileinheit 2 quer zu der Aufreihungsrichtung 3 verlaufen. Je nach Ausführungsform ist ihr Längsverlauf linear oder zumindest teilweise nicht linear und sie erstrecken sich insbesondere in der Ausdehnungsebene 4 bis hin zu der quer zur Aufreihungsrichtung 3 orientierten vorderen Außenfläche 18a. Indem die internen Strömungskanäle 32a, 32b beim Ausführungsbeispiel Arbeitskanäle bilden, über die ein durch Fluidkraft betätigbarer Verbraucher ansteuerbar ist, sind ihren an der vorderen Außenfläche 18a befindlichen Mündungen Anschlussmittel 33 zugeordnet, die ein lösbares Anschließen von zum entsprechenden Verbraucher führenden Fluidleitungen ermöglichen. Die Anschlussmittel 33 können insbesondere als Steckverbindungsmittel ausgeführt sein.

Durch entsprechende Betätigung der Ventileinrichtung 14 können die internen Strömungskanäle 32a, 32b wahlweise mit dem Speisekanal 26a oder einem Entlüftungskanal 26b, 26c verbunden werden, um einen angeschlossenen Verbraucher mit Druckmedium zu versorgen oder zu entlüften.

Der gesamte Querschnitt der internen Strömungskanäle 32a, 32b liegt innerhalb der jeweils zugeordneten Ventileinheit 2. Durch besondere Maßnahmen ist jedoch gewährleistet, dass sich auch bei geringer Baubreite "B" der einzelnen Ventileinheiten 2 relativ große Kanalbreiten "b" der internen Strömungskanäle 32a, 32b realisieren lassen. Die Breitenabmessungen sind hier als in Aufreihungsrichtung 3 gemessen zu verstehen. Durch die entsprechende Maßnahme können auch mit geringen Baubreiten "B" der einzelnen Ventileinheiten 2 ausreichende Strömungsquerschnitte zur Verfügung gestellt werden, was die Realisierung von Ventilanordnungen 1 sehr geringer Abmessungen gestattet. Beispielsweise ist es möglich, eine Baubreite "B" in der Größenordnung von 7 mm zu realisieren.

Die zugehörigen Maßnahmen sehen vor, dass die internen Strömungskanäle 32a, 32b an ihrer der ersten Anbaufläche 5 zugewandten ersten Längsseite 34a, 34b von einer seitlichen Kanalwand 36a, 36b begrenzt sind, bei der es sich um einen unmittelbaren Bestandteil derjenigen Ventileinheit 2 handelt, in der der betreffende interne Strömungskanal 32a, 32b verläuft.

An der der anderen, zweiten Anbauseite 6 zugewandten zweiten Längsseite 35a, 35b hingegen sind die internen Strömungskanäle 32a, 32b entlang eines sich zumindest über einen Teil ihrer jeweiligen Kanallänge erstreckenden Längenabschnittes offen ausgebildet, wobei der entsprechende Kanalabschnitt als offener Längenabschnitt 37a, 37b bezeichnet sei. Im Bereich des offenen Längenabschnittes 37a, 37b ist der betreffende interne Strömungskanal 32a, 32b als zur zweiten Anbaufläche 6 hin offene nutartige Vertiefung ausgebildet. Im Rahmen einer Gießherstellung, beispielsweise durch Spritzgießen, können somit auch komplexe Längsverläufe der internen Strömungskanäle 32a, 32b relativ einfach hergestellt werden. Es besteht insbesondere die Möglichkeit, den Kanalverlauf so zu wählen, dass das Volumen der Ventileinheit 2 optimal ausgenutzt wird, was kompakte Außenabmessungen ermöglicht.

Damit die internen Strömungskanäle 32a, 32b auch entlang ihres offenen Längenabschnittes 37a, 37b geschlossen sind, ist vorgesehen, dass ihr offener Längenabschnitt 37a, 37b von der seitlichen Kanalwand 36a, 36b der an der zweiten Anbauseite 6 angesetzten benachbarten Ventileinheit 2 abgedeckt ist. Die seitliche Kanalwand 36a, 36b einer jeweiligen Ventileinheit 2 hat somit eine Doppelfunktion, indem sie zum einen zur seitlichen Begrenzung der internen Strömungskanäle 32a, 32b der zugeordneten Ventileinheit 2 dient, gleichzeitig aber auch als Kanalwand für die offenen Längenabschnitte der internen Strömungskanäle der an der ersten Anbaufläche 5 angesetzten benachbarten Ventileinheit 2 fungiert. Von Vorteil ist dabei, dass innerhalb einer jeweiligen Ventileinheit 2 nur eine Wandstärke zur längsseitigen Begrenzung der internen Strömungskanäle 32a, 32b erforderlich ist, mithin die Kanalbreite "b" den größten Teil der Baubreite "B" der Ventileinheit 2 einnehmen kann.

Die zwischen benachbarte Ventileinheiten 2 vorgesehenen Dichtmittel 7 sorgen im Umfangsbereich der offenen Längenabschnitte 37a, 37b für eine fluiddichte Abdichtung zwischen den benachbarten Ventileinheiten 2. In diesem Zusammenhang ist es von Vorteil, wenn die entsprechenden Dichtmittel in Baueinheit mit den zur Abdichtung der Übergangsbereiche zwischen den Fluidkanälen 26a, 26b, 26c vorgesehenen Dichtmitteln ausgeführt sind, wobei wie abgebildet jeweils ein einziges, zwischen benachbarte Ventileinheiten 2 zwischengefügtes Dichtelement 38 die Dichtmittel 7 bildet. Das Dichtelement 38 kann nach Art einer Dichtmaske ausgeführt sein, wobei es sich auch um eine Dichtplatte handeln kann.

Zweckmäßigerweise verfügt eine jeweilige Ventileinheit 2 an der zweiten Anbaufläche 6 über Aufnahmenuten 42, in die die Dichtmittel 7 einlegbar sind. Die erste Anbaufläche 5 hingegen ist, wie aus Figur 4 hervorgeht, vorzugsweise glattflächig eben ausgebildet.

Damit eine einfache, zuordnungsrichtige Montage der Ventileinheiten 2 möglich ist, sind diese an ihren ersten und zweiten Anbauflächen 5, 6 mit zueinander komplementären ersten und zweiten Zentriermitteln 43, 44 ausgestattet, die beim aneinander Ansetzen benachbarter Ventileinheiten 2 formschlüssig ineinander eingreifen können. Die einen Zentriermittel sind beim Ausführungsbeispiel als Vorsprünge, die anderen Zentriermittel als komplementär konturierte Vertiefungen ausgebildet.

Die Ventileinheiten 2 können mit Durchbrechungen 45 ausgestattet sein, die zweckmäßigerweise innerhalb der ersten und zweiten Zentriermittel 43, 44 verlaufen und durch die die Zuganker 12 hindurchführbar sind. Auf diese Weise ergibt sich eine koaxiale Anordnung von Zugankern 12 und Zentriermitteln 43, 44, was zu einer weiteren Einsparung von Bauvolumen beiträgt.

Es wäre prinzipiell möglich, den offenen Längenabschnitt 37a, 37b über die gesamte Kanallänge des jeweils zugeordneten Strömungskanals 32a, 32b auszuführen. Unter Berücksichtigung dessen, dass an den äußeren Enden der internen Strömungskanäle 32a, 32b regelmäßig Anschlussmittel 33 vorgesehen werden, die ein abgedichtetes Anschließen weiterführender Fluidleitungen oder Kanäle ermöglichen, ist es jedoch zweckmäßig, zumindest den der Ventileinrichtung 14 entgegengesetzten äußeren Endbereich eines jeweiligen internen Strömungskanals 32a, 32b über den gesamten Umfang hinweg vollständig geschlossen auszuführen, wobei die Kanalwandung komplett von der zugeordneten Ventileinheit 2 gebildet wird. Der entsprechende Kanalabschnitt sei als geschlossener Längenabschnitt 46a, 46b bezeichnet und kann, je nach Baulänge, zu einer Anschlussöffnung führen oder eine solche Anschlussöffnung unmittelbar bilden. Jedenfalls ist es von Vorteil, wenn die Länge des geschlossenen Längenabschnittes 46a, 46b möglichst gering gehalten wird, so dass sich der offene Längenabschnitt 37a, 37b über den größten Teil der Kanallänge des betreffenden internen Strömungskanals 32a, 32b erstreckt.

Beim Ausführungsbeispiel sind die internen Strömungskanäle 32a, 32b so angeordnet und ausgebildet, dass sie mit ihrem inneren Endbereich von einer Längsseite der Ventileinrichtung 14 bzw. deren Aufnahme 15 abgehen und im Rahmen eines nicht linearen Längsverlaufes zu der vorderen Außenfläche 18a geführt sind. Der Längsverlauf ist dabei insbesondere abgeknickt oder bogenförmig, wobei zumindest die nicht linearen Abschnitte als offene Längenabschnitte 37a, 37b ausgeführt sind. Diese offenen Längenabschnitte 37a, 37b beschränken sich auf den Basiskörper 13, wobei sie sich ausgehend vom inneren Endbereich eines jeweiligen internen Strömungskanals 32a, 32b bis kurz vor eine vordere Außenfläche 47 des Basiskörpers 13 erstrecken, an die der vordere Zusatzkörper 22a angesetzt ist. Mit einem kurzen geschlossenen Längenabschnitt 46a, 46b münden die internen Strömungskanäle 32a, 32b zu der vorderen Außenfläche 47 aus. Von dort aus setzen sich die internen Strömungskanäle 32a, 32b mit weiteren geschlossenen Längenabschnitten 46a, 46b fort, die den betreffenden Zusatzkörper 22a durchsetzen und mit den Anschlussmitteln 33 ausgestattet sind. Im Übergangsbereich zwischen dem Basiskörper 13 und dem vorderen Zusatzkörper 22a sind zwischen die miteinander fluchtenden geschlossenen Längenabschnitte 46a, 46b ringförmige Dichtungen 48 zwischengefügt, um einen nach außen hin fluiddichten Übergang zu schaffen. Die vordere Anbaufläche 47 kann zur Aufnahme der ringförmigen Dichtungen 48 im Umfangsbereich des geschlossenen Längenabschnittes 46a, 46b mit einer ringförmigen Erweiterung 49 ausgestattet sein.

Es wäre auch durchaus möglich, die Anschlussmittel 33 unmittelbar dem geschlossenen Längenabschnitt 46a, 46b der internen Strömungskanäle 32a, 32b im Bereich der vorderen Außenfläche 47 des Basiskörpers 13 zuzuordnen und auf einen Zusatzkörper 22a zu verzichten.

Zusammengefasst kann festgehalten werden, dass sich bei der Ventilanordnung 1 die Baubreite der einzelnen Ventileinheiten 2 für solche internen Strömungskanäle optimal ausnutzen lässt, die sich in der Ausdehnungsebene der betreffenden Ventileinheit 2 erstrecken, deren Längsverlauf also quer zu der Aufreihungsrichtung 3 und insbesondere parallel zu den Anbauflächen 5, 6 gerichtet ist. Die internen Strömungskanäle 32a, 32b können längsseits zu einer der Anbauflächen 6 hin offen ausgebildet werden, wobei die an dieser Anbaufläche angesetzte benachbarte Ventileinheit eine Deckelfunktion übernimmt und den offenen Längenabschnitt mit der zugeordneten Anbaufläche 5 abdeckt und verschließt. Bei aneinander angesetzten Ventileinheiten 2 übernimmt somit die beim Ausführungsbeispiel integral mit dem betreffenden Basiskörper 13 ausgebildete seitliche Kanalwand 36a, 36b eine Doppelfunktion, indem sie mit ihrer Innenfläche den internen Strömungskanal 32a, 32b der zugeordneten Ventileinheit 2 begrenzt und mit ihrer mit der ersten Anbaufläche 5 zusammenfallenden Außenfläche eine längsseitige Kanalbegrenzung der internen Strömungskanäle 32a, 32b der benachbarten Ventileinheit 2 vornimmt.

Die zumindest partiell längsseits offene Ausgestaltung interner Strömungskanäle ist nicht auf Strömungskanäle beschränkt, die wie beim Ausführungsbeispiel als Arbeitskanäle fungieren. Das Prinzip lässt sich auf zu anderen Funktionen dienende interne Strömungskanäle in gleicher Weise übertragen, beispielsweise auf Vorsteuerkanäle, die dazu dienen, das Ventilglied 16 mit Druckmedium zu beaufschlagen, um dessen Schaltstellung zu verändern.

Die Ventileinheiten 2 bestehen, zumindest soweit die Basiskörper 13 betroffen sind, vorzugsweise aus Kunststoffmaterial oder Metall, beispielsweise Aluminiummaterial. Derartige Materialien ermöglichen eine günstige Herstellung durch Spritz- bzw. Druckgießverfahren.

## Patentansprüche

1. Ventilanordnung, mit mehreren Ventileinheiten (2), die auf einander entgegengesetzten Seiten jeweils eine Anbaufläche (5, 6) aufweisen und die unter Bildung einer Baugruppe in einer Aufreihungsrichtung (3) aufeinanderfolgend angeordnet und dabei mit einander zugewandten Anbauflächen (5, 6) Seite an Seite aneinander angesetzt sind, wobei jede Ventileinheit (2) zwei quer zur Aufreihungsrichtung (3) verlaufende und als Arbeitskanäle ausgebildete interne Strömungskanäle (32a, 32b) enthält, die ausgehend von einer Ventileinrichtung (14) der betreffenden Ventileinheit (2) zu ein und derselben quer zur Aufreihungsrichtung (3) orientierten Außenfläche (18a) der Ventileinheit (2) verlaufen, wo ihnen Anschlussmittel (33) zum Anschließen einer weiterführenden Fluidleitung zugeordnet sind, **dadurch gekennzeichnet, dass** die beiden internen Strömungskanäle (32a, 32b) an ihrer der einen, ersten Anbaufläche (5) zugewandten ersten Längsseite (34a, 34b) jeweils von einer seitlichen Kanalwand (36a, 36b) der betreffenden Ventileinheit (2) begrenzt sind und an ihrer der anderen, zweiten Anbauseite (6) zugewandten zweiten Längsseite (35a, 35b) jeweils entlang eines sich zumindest über einen Teil ihrer Kanallänge erstreckenden Längenabschnittes (37a, 37b) offen sind, wobei die offenen Längenabschnitte (37a, 37b) einen abgeknickten oder bogenförmigen Längsverlauf haben und von der seitlichen Kanalwand (36a, 36b) der an der zweiten Anbauseite (6) angesetzten benachbarten Ventileinheit (2) abgedeckt sind.

2. Ventilanordnung nach Anspruch 1, **dadurch gekennzeichnet, dass** mindestens ein interner Strömungskanal (32a, 32b) im Anschluss an seinen offenen Längenabschnitt (37a, 37b) einen umfangsseitig vollständig geschlossenen Längenabschnitt (46a, 46b) aufweist, der zu einer Anschlussöffnung führen oder eine solchen bilden kann.

3. Ventilanordnung nach Anspruch 1 oder 2, **dadurch gekennzeichnet, dass** sich der offene Längenabschnitt (37a, 37b) über den größten Teil der Kanallänge des betreffenden internen Strömungskanals (32a, 32b) erstreckt.

4. Ventilanordnung nach einem der Ansprüche 1 bis 3, **dadurch gekennzeichnet, dass** die Ventileinheiten (2) jeweils einen Basiskörper (13) aufweisen, der mit einer Ventileinrichtung (14) bestückt ist und in dem die beiden einen offenen Längenabschnitt (37a, 37b) aufweisenden internen Strömungskanäle (32a, 32b) verlaufen.

5. Ventilanordnung nach Anspruch 4, **dadurch gekennzeichnet, dass** sich die beiden offenen Längenabschnitt (37a, 37b) aufweisenden internen Strömungskanäle (32a, 32b) zwischen der Ventileinrichtung (14) und einer quer zur Aufreihungsrichtung (3) orientierten Außenfläche (47) des Basiskörpers (13) erstrecken.

6. Ventilanordnung nach Anspruch 5, **dadurch gekennzeichnet, dass** die Ventileinrichtung (14) eine Längserstreckung aufweist, wobei die beiden einen offenen Längenabschnitt (37a, 37b) aufweisenden internen Strömungskanäle (32a, 32b) seitlich von der Ventileinrichtung (14) abgehen und im Rahmen eines zumindest partiell nicht linearen Längsverlaufes zu einer Außenfläche geführt sind, die so platziert ist, dass ihre Flächennormale parallel zur Längsachse (17) der Ventileinrichtung (14) verläuft.

7. Ventilanordnung nach Anspruch 5 oder 6, **dadurch gekennzeichnet, dass** an die Außenfläche (47) des Basiskörpers (13) ein Zusatzkörper (22a) angesetzt ist, in dem sich die internen Strömungskanäle (32a, 32b) jeweils mit einem umfangsseitig geschlossenen Längenabschnitt (46a, 46b) fortsetzen.

8. Ventilanordnung nach einem der Ansprüche 4 bis 7, **dadurch gekennzeichnet, dass** die Ventileinrichtung (14) im Innern des Basiskörpers (13) der betreffenden Ventileinheit (2) untergebracht ist.

9. Ventilanordnung nach einem der Ansprüche 1 bis 8, **dadurch gekennzeichnet, dass** die Ventileinheiten (2) jeweils eine plattenartige Gestalt haben, wobei ihre Ausdehnungsebenen (4) rechtwinkelig zur Aufreihungsrichtung (3) verlaufen.

10. Ventilanordnung nach einem der Ansprüche 1 bis 9, **dadurch gekennzeichnet, dass** jede Ventileinheit (2) in der Aufreihungsrichtung (3) von einem oder mehreren Fluidkanälen (26a, 26b, 26c) durchsetzt ist, die jeweils mit einer Ventileinrichtung (14) der betreffenden Ventileinheit (2) kommunizieren, wobei die Fluidkanäle (26a, 26b, 26c) benachbarter Ventileinheiten (2) zur Bildung von Durchgangskanälen miteinander verbunden sind.

11. Ventilanordnung nach Anspruch 10, **dadurch gekennzeichnet, dass** zwischen benachbarten Ventileinheiten (2) Dichtmittel (7) angeordnet sind, die im Umfangsbereich der miteinander kommunizierenden Mündungen der Fluidkanäle (26a, 26b, 26c) und im Umfangsbereich des offenen Längenabschnittes (37a, 37b) der zwei internen Strömungskanäle (32a, 32b) eine fluiddichte Abdichtung zwischen benachbarten Ventileinheiten (2) bewirken.

12. Ventilanordnung nach Anspruch 11, **dadurch gekennzeichnet, dass** die Dichtmittel (7) von einem zwischen benachbarte Ventileinheiten (2) zwischengefügten Dichtungselement (38) gebildet sind.

13. Ventilanordnung nach einem der Ansprüche 1 bis 12, **gekennzeichnet durch** ineinander eingreifende Zentriermittel (43, 44) benachbarter Ventileinheiten (2).

14. Ventilanordnung nach einem der Ansprüche 1 bis 13, **dadurch gekennzeichnet, dass** die Ventileinheiten (2) an der ersten Anbaufläche (5) glattflächig eben ausgebildet sind.

15. Ventilanordnung nach einem der Ansprüche 1 bis 14, **dadurch gekennzeichnet, dass** mindestens ein interner Strömungskanal (32a, 32b) im Bereich seines offenen Längenabschnittes (37a, 37b) als zur zweiten Anbaufläche (6) hin offene nutartige Vertiefung ausgebildet ist.

16. Ventilanordnung nach einem der Ansprüche 1 bis 15, **dadurch gekennzeichnet, dass** die beiden äußeren Ventileinheiten (2) an ihrer Außenseite jeweils von einem Abschlusskörper (8, 9) flankiert sind.

## Claims

1. Valve assembly with several valve units (2) which have a mounting face (5, 6) on each opposing side and are arranged consecutively in one direction of lining-up (3) to form a sub-assembly and at the same time are fastened to one another, side by side, with mounting faces (5, 6) facing one another, wherein each valve unit (2) contains two internal flow passages (32a, 32b) running at right-angles to the direction of lining-up (3) and designed as operating passages and which run from a valve device (14) of the valve unit (2) concerned to one and the same outer face (18a) of the valve unit (2) oriented in the direction of lining-up (3), where they are assigned connection means (33) for connection to a fluid line which continues further, **characterised in that** each of the two internal flow passages (32a, 32b) is bounded on its first long side (34a, 34b) facing the one first mounting face (5) by a side passage wall (36a, 36b) of the valve unit (2) concerned, and on its second long side (35a, 35b) facing the other second mounting face (6) is open along a length section (37a, 37b) extending over at least a part of its passage length, wherein the open length sections (37a, 37b) have a bent or curved longitudinal course and are covered by the side passage wall (36a, 36b) of the adjacent valve unit (2) attached to the second mounting face (6).

2. Valve assembly according to claim 1, **characterised in that** one or more of the internal flow passages (32a, 32b) has in the connection on its open length section (37a, 37b) a length section (46a, 46b) which is completely closed on the peripheral side, which can lead to or form a connection opening.

3. Valve assembly according to claim 1 or 2, **characterised in that** the open length section (37a, 37b) extends over the major part of the passage length of the internal flow passage (32a, 32b) concerned.

4. Valve assembly according to any of claims 1 to 3, **characterised in that** each of the valve units (2) has a base body (13) which is equipped with a valve device (14) and in which run the two internal flow passages (32a, 32b) with an open length section (37a, 37b).

5. Valve assembly according to claim 4, **characterised in that** the two internal flow passages (32a, 32b) with open length sections (37a, 37b) extend between the valve device (14) and an outer face (47) of the base body (13) aligned at right-angles to the direction of lining-up (3).

6. Valve assembly according to claim 5, **characterised in that** the valve device (14) has a longitudinal extent, wherein the two internal flow passages (32a, 32b) with open length section (37a, 37b) start from the side of the valve device (14) and are guided in the course of a longitudinal path which is at least partially non-linear to an outer face which is so placed that its surface normal runs parallel to the longitudinal axis (17) of the valve device (14).

7. Valve assembly according to claim 5 or 6, **characterised in that**, attached to the outer face (47) of the base body (13) is an additional body (22a) in which the internal flow passages (32a, 32b) each continue with a length section (46a, 46b) closed on the peripheral side.

8. Valve assembly according to any of claims 4 to 7, **characterised in that** the valve device (14) is accommodated inside the base body (13) of the valve unit (2) concerned.

9. Valve assembly according to any of claims 1 to 8, **characterised in that** each of the valve units (2) has a plate-like shape, with their extension planes (4) running at right-angles to the direction of lining-up (3).

10. Valve assembly according to any of claims 1 to 9, **characterised in that** one or more fluid passages (26a, 26b, 26c) pass through each valve unit (2) in the direction of lining-up (3), each communicating with a valve device (14) of the valve unit (2) concerned, with the fluid passages (26a, 26b, 26c) of adjacent valve units (2) being connected to one another to form through passages.

11. Valve assembly according to claim 10, **characterised in that** sealing means (7) are arranged between adjacent valve units (2) and effect a fluid-tight seal between adjacent valve units (2) in the peripheral area of the mouths of the fluid passages (26a, 26b, 26c) communicating with one another and in the peripheral area of the open length section (37a, 37b) of the two internal flow passages (32a, 32b).

12. Valve assembly according to claim 11, **characterised in that** the sealing means (7) are formed by a sealing element (38) inserted between adjacent valve units (2).

13. Valve assembly according to any of claims 1 to 12, **characterised by** centring means (43, 44) of adjacent valve units (2) which engage in one another.

14. Valve assembly according to any of claims 1 to 13, **characterised in that** the valve units (2) are formed with a smooth flat surface on the first mounting face (5).

15. Valve assembly according to any of claims 1 to 14, **characterised in that**, in the area of its open length section (37a, 37b), one or more of the internal flow passages (32a, 32b) is in the form of a slot-like recess open towards the second mounting face (6).

16. Valve assembly according to any of claims 1 to 15, **characterised in that** the two outer valve units (2) are flanked on each of their outer sides by a terminating body (8, 9).

## Revendications

1. Agencement de soupapes comportant plusieurs unités de soupape (2) qui présentent chacune une surface de montage (5, 6) sur des faces opposées l'une à l'autre et qui sont disposées les unes à la suite des autres dans une direction de juxtaposition (3), en formant un ensemble, et qui sont placées ainsi côte à côte avec leurs surfaces de montage (5, 6) tournées l'une vers l'autre, chaque unité de soupape (2) contenant deux canaux d'écoulement internes (32a, 32b) s'étendant transversalement à la direction de juxtaposition (3) et réalisés sous la forme de canaux de travail qui, partant d'un dispositif à soupape (14) de l'unité de soupape (2) concernée, s'étendent vers une seule et même surface extérieure (18a), orientée transversalement à la direction de juxtaposition (3), de l'unité de soupape (2), où leur sont associés des moyens de raccordement (33) pour raccorder une conduite de fluide menant plus loin, **caractérisé en ce que** les deux canaux d'écoulement internes (32a, 32b) sont limités chacun, sur leur premier côté longitudinal (34a, 34b) tourné vers une première face de montage (5), par une paroi de canal (36a, 36b) latérale de l'unité de soupape (2) concernée, et sont ouverts, sur leur deuxième côté longitudinal (35a, 35b) tourné vers l'autre deuxième face de montage (6), le long d'un tronçon de longueur (37a, 37b) s'étendant au moins sur une partie de sa longueur de canal, les tronçons de longueur (37a, 37b) ouverts ayant un parcours longitudinal coudé ou en forme d'arc et étant recouverts par la paroi de canal (36a, 36b) latérale de l'unité de soupape (2) voisine placée sur la deuxième face de montage (6).

2. Agencement de soupapes selon la revendication 1, **caractérisé en ce qu'**au moins un canal d'écoulement interne (32a, 32b) présente, à la suite de son tronçon de longueur (37a, 37b) ouvert, un tronçon de longueur (46a, 46b) entièrement fermé périphériquement qui peut conduire à une ouverture de raccordement ou former celle-ci.

3. Agencement de soupapes selon la revendication 1 ou 2, **caractérisé en ce que** le tronçon de longueur (37a, 37b) ouvert s'étend sur la majeure partie de la longueur du canal d'écoulement interne (32a, 32b) concerné.

4. Agencement de soupapes selon l'une des revendications 1 à 3, **caractérisé en ce que** les unités de soupape (2) comportent chacune un corps de base (13) qui est équipé d'un dispositif à soupape (14) et dans lequel s'étendent les deux canaux d'écoulement internes (32a, 32b) comportant un tronçon de longueur (37a, 37b) ouvert.

5. Agencement de soupapes selon la revendication 4, **caractérisé en ce que** les deux canaux d'écoulement internes (32a, 32b), comportant un tronçon de longueur (37a, 37b) ouvert, s'étendent entre le dispositif à soupape (14) et une surface extérieure (47) du corps de base (13), orientée transversalement à la direction de juxtaposition (3).

6. Agencement de soupapes selon la revendication 5, **caractérisé en ce que** le dispositif à soupape (14) présente une étendue dans le sens de la longueur, les deux canaux d'écoulement internes (32a, 32b) comportant un tronçon de longueur (37a, 37b) ouvert, partant latéralement du dispositif à soupape (14) et s'étend, dans le cadre d'un parcours longitudinal non linéaire, au moins partiellement, vers une surface extérieure qui est placée de manière que sa normale à la surface s'étende parallèlement à l'axe longitudinal (17) du dispositif à soupape (14).

7. Agencement de soupape selon la revendication 5 ou 6, **caractérisé en ce que** sur la surface extérieure (47) du corps de base (13) est placé un corps supplémentaire (22a) dans lequel les canaux d'écoulement internes (32a, 32b) se prolongent chacun par un tronçon de longueur (46a, 46b) fermé périphériquement.

8. Agencement de soupapes selon l'une des revendications 4 à 7, **caractérisé en ce que** le dispositif à soupape (14) est logé à l'intérieur du corps de base (13) de l'unité de soupape (2) concernée.

9. Agencement de soupapes selon l'une des revendications 1 à 8, **caractérisé en ce que** les unités à soupape (2) ont chacune une forme de type plaque, leurs plans d'étendue (4) s'étendant perpendiculairement à la direction de juxtaposition (3).

10. Agencement de soupapes selon l'une des revendications 1 à 9, **caractérisé en ce que** chaque unité de soupape (2) est traversée dans la direction de juxtaposition (3) par un ou plusieurs canaux de fluide (26a, 26b, 26c) qui communiquent chacun avec un dispositif à soupape (14) de l'unité de soupape (2) concernée, les canaux de fluide (26a, 26b, 26c) d'unités de soupape (2) voisines étant reliés entre eux pour former des canaux de passage.

11. Agencement de soupapes selon la revendication 10, **caractérisé en ce qu'**entre des unités de soupape (2) voisines sont disposés des moyens d'étanchéité (7) qui réalisent, dans la zone périphérique des embouchures communiquant entre elles, des canaux de fluide (26a, 26b, 26c) et dans la zone périphérique du tronçon de longueur (37a, 37b) ouvert des deux canaux d'écoulement internes (32a, 32b), une étanchéité aux fluides entre des unités de soupape (2) voisines.

12. Agencement de soupapes selon la revendication 11, **caractérisé en ce que** les moyens d'étanchéité (7) sont formés par un élément d'étanchéité (38) inséré entre des unités de soupape (2) voisines.

13. Agencement de soupapes selon l'une des revendications 1 à 12, **caractérisé par** des moyens de centrage (43, 44) s'engageant l'un dans l'autre d'unités de soupape (2) voisines.

14. Agencement de soupapes selon l'une des revendications 1 à 13, **caractérisé en ce que** les unités de soupape (2) sont réalisées avec une surface lisse et plane sur la première surface de montage (5).

15. Agencement de soupapes selon l'une des revendications 1 à 14, **caractérisé en ce qu'**au moins un canal d'écoulement interne (32a, 32b) est réalisé, dans la zone de son tronçon de longueur (37a, 37b) ouvert, sous la forme d'un renfoncement de type rainure ouvert vers la deuxième surface de montage (6).

16. Agencement de soupapes selon l'une des revendications 1 à 15, **caractérisé en ce que** les deux unités de soupape (2) extérieures sont flanquées chacune sur leur face extérieure par un corps de terminaison (8, 9).
